# EUROPÄISCHE PATENTSCHRIFT

(11) **EP 2 301 723 B1**
(45) Veröffentlichungstag und Bekanntmachung des Hinweises auf die Patenterteilung: **26.07.2017**
(21) Anmeldenummer: 10170997.0
(22) Anmeldetag: 28.07.2010
(51) Int. Cl.: B23D 51/02

(54) **Führungsvorrichtung, insbesondere Hubelementführungsvorrichtung**
Guide device, in particular guide device for a lifting element
Dispositif de guidage, notamment dispositif de guidage d'élément de levage

(30) Priorität: 25.09.2009 DE 102009045035
(43) Veröffentlichungstag der Anmeldung: 30.03.2011
(73) Patentinhaber: Robert Bosch GmbH, 70442 Stuttgart (DE)
(72) Erfinder: Kaiser, Hans, 3297, Leuzigen (CH); Stooss, Paul, 4534, Flumenthal (CH); Haider, Peter, 09113, Chemnitz (DE)

(56) Entgegenhaltungen:
- EP-A2- 0 144 490
- EP-A2- 2 105 234
- DE-A1- 2 847 115
- DE-A1- 3 102 555
- DE-A1- 4 218 982
- DE-C- 907 236
- GB-A- 620 520
- GB-A- 841 780
- US-A- 2 849 900

## Beschreibung

### Stand der Technik

Es ist bereits eine Führungsvorrichtung, insbesondere eine Hubelementführungsvorrichtung, für eine Handwerkzeugmaschine vorgeschlagen worden, die eine Führungseinheit aufweist, die um eine Pendelachse schwenkbar gelagert ist und zu einer Führung zumindest eines Hubelements in eine Hubrichtung vorgesehen ist. Beispiele sind aus US2849900A1 oder EP2105234A2 bekannt.

### Offenbarung der Erfindung

Es wird eine Handwerkzeugmaschine, gemäß Anspruch 1, vorgeschlagen, insbesondere Stichsäge, mit zumindest einem Hubelement, das in einem Arbeitsbetrieb in einer fortlaufenden Auf- und Abwärtsbewegung in eine Hubrichtung antreibbar ist, und mit zumindest einer Führungsvorrichtung die zumindest eine Führungseinheit zu einer Führung zumindest eines Hubelements in eine Hubrichtung aufweist, wobei die Führungseinheit um eine Pendelachse schwenkbar gelagert ist und wobei das Hubelement mittels zumindest einer ersten Lagereinheit entlang der Führungseinheit geführt ist. In diesem Zusammenhang soll unter einer "Führungseinheit" insbesondere eine Einheit verstanden werden, die eine Bewegungsrichtung, insbesondere eines Hubelements, während eines Bewegungsvorgangs einer Hubbewegung vorgibt. Alternativ und/oder zusätzlich kann die Führungseinheit dazu vorgesehen sein, eine Bewegung des Hubelements, die von der bevorzugten Bewegungsrichtung bzw. von einer Hubrichtung abweicht, einzuschränken. Die Führungseinheit ist beispielsweise als ein Pendelelement und/oder eine Wippe ausgebildet. Alternativ und/oder zusätzlich kann die Führungseinheit einteilig oder mehrteilig ausgebildet sein, wobei bei einer mehrteiligen Ausführung die Führungseinheit teilweise demontierbar ist. Generell wäre jedoch auch jede andere, dem Fachmann als zweckdienlich erscheinende Ausgestaltung denkbar. Hierfür weist die Führungseinheit bevorzugt ein Führungselement auf, wobei unter einem "Führungselement" insbesondere ein Element, wie beispielsweise ein Steg, eine Stange, eine Begrenzung einer Ausnehmung und/oder jede andere, dem Fachmann als sinnvoll erscheinende Ausgestaltung verstanden werden soll. Alternativ und/oder zusätzlich weist dieses Führungselement eine Ausrichtung auf, die insbesondere parallel zur Hubrichtung ausgerichtet ist, wobei das Führungselement durch diese Ausrichtung die Bewegungsrichtung des Hubelements bestimmt. Ferner soll unter einem "Hubelement" insbesondere ein Element, wie beispielsweise eine Hubstange, verstanden werden, das in zumindest einem Betriebszustand der Handwerkzeugmaschine in einer Auf- und Abwärtsbewegung, insbesondere einer fortlaufenden Auf- und Abwärtsbewegung, bevorzugt von einem Antriebsmittel, wie einem Motor, angetrieben wird. Zudem weist das Hubelement eine Werkzeugaufnahme für ein Werkzeug, wie ein Sägeblatt, auf. Zudem soll unter einer "Pendelachse" insbesondere eine Achse verstanden werden, um die die Führungseinheit insbesondere in einem Arbeitsbetrieb bzw. Schneidebetrieb der Handwerkzeugmaschine schwenkbar ist, wobei unter "schwenkbar" insbesondere eine Drehung um diese Achse in einem Winkelbereich von 180°, bevorzugt von 90° und besonders bevorzugt von 30° verstanden werden soll. Des Weiteren soll unter einer "Lagereinheit" insbesondere eine Einheit verstanden werden, die Lagerkräfte des Hubelements aufnimmt und auf die Führungseinheit und/oder auf ein Gehäuse, wie ein Getriebegehäuse oder ein Außengehäuse der Handwerkzeugmaschine, überträgt. Die Lagereinheit kann einteilig oder mehrteilig ausgebildet sein, wodurch auch die Lagereinheit teilweise demontierbar ist. Unter dem Begriff "geführt" soll hier insbesondere eine passive Beeinflussung bzw. Einschränkung der Bewegungsrichtung des Hubelements verstanden werden.

Durch die erfindungsgemäße Ausgestaltung können die Pendelachse und die Lagerung des Hubelements konstruktiv einfach voneinander getrennt werden, was bei fehlender Beeinträchtigung einer Funktion der Führungsvorrichtung zu einer vorteilhaften Reduzierung einer Einbauhöhe der Führungsvorrichtung des Hubelements und des Hubelements selbst führt. Ferner kann dadurch ein Bauraum bzw. ein Getrieberaum vorteilhaft reduziert werden, was sich unmittelbar auf Größe und Gewicht der Handwerkzeugmaschine auswirkt.

Des Weiteren wird vorgeschlagen, dass die Führungseinheit zumindest eine Lauffläche aufweist. Hierbei soll unter einer "Lauffläche" insbesondere eine Fläche verstanden werden, die in direktem Kontakt mit zumindest der ersten Lagereinheit bzw. einem Bauteil der ersten Lagereinheit und/oder einem Anteil dieses Bauteils steht. Besonders vorteilhaft weist die Führungseinheit zumindest zwei Laufflächen auf. Alternativ und/oder zusätzlich ist die erste Lagereinheit bzw. das Bauteil der ersten Lagereinheit und/oder ein Anteil des Bauteils direkt gleitend auf der Lauffläche bewegbar. Ferner kann die Lauffläche alternativ und/oder zusätzlich dazu vorgesehen sein, die Lagerkräfte der ersten Lagereinheit direkt aufzunehmen. Bevorzugt ist die zumindest eine Lauffläche an dem Führungselement der Führungseinheit angeordnet und vorteilhaft einstückig mit diesem ausgebildet, wobei unter "einstückig" hierbei insbesondere "aus einem Guss gebildet" und/oder "als ein Bauteil ausgebildet" verstanden werden soll. Ferner kann auch mehr als eine Lauffläche vorgesehen sein, wobei ein Fachmann eine Anzahl konstruktionsbedingt selbst auswählen wird. Generell wäre es auch möglich, anstelle eines Flächenkontakts mehrere Linienkontakte vorzusehen. Durch die Realisierung der Lauffläche kann eine Bewegung des Hubelements besonders einfach gestaltet werden. Zudem können eine große Auflagefläche und damit eine gute Kraftverteilung bereitgestellt werden.

Zudem kann es von Vorteil sein, wenn die erste Lagereinheit zumindest ein im Wesentlichen senkrecht zur Hubrichtung ausgerichtetes Verbindungselement aufweist, das zumindest zwei mit der Führungseinheit korrespondierende Kontaktelemente aufweist. In diesem Zusammenhang soll unter der Wendung "im Wesentlichen senkrecht" insbesondere verstanden werden, dass das Verbindungselement mit einer Winkelabweichung von kleiner als plus/minus 15°, bevorzugt kleiner als plus/minus 5° und besonders bevorzugt kleiner als plus/minus 2° bezüglich eines Referenzobjekts, hier einer Senkrechten zur Hubrichtung, ausgerichtet ist. Unter einem "Kontaktelement" soll hier insbesondere ein Element verstanden werden, das zumindest eine Lauffläche aufweist, die mit der Lauffläche der Führungseinheit bzw. des Führungselements direkt korrespondiert. Diese Lauffläche kann beispielsweise einstückig mit einem Steg und/oder einer Begrenzung einer Ausnehmung und/oder jeder anderen, dem Fachmann als sinnvoll erscheinenden Ausgestaltung der Lagereinheit bzw. dem Bauteil der ersten Lagereinheit ausgebildet sein. Ein "Verbindungselement" stellt hier insbesondere ein Element dar, das mittels der zwei Kontaktelemente in direktem Kontakt zu zumindest zwei Bereichen bzw. Führungselementen der Führungseinheit steht. Alternativ und/oder zusätzlich verbindet das Verbindungselement zumindest zwei Bereiche der Führungseinheit über die Kontaktelemente direkt miteinander, also ohne ein weiteres zwischengeschaltetes Bauelement. Hierbei weisen die zwei Bereiche der Führungseinheit insbesondere jeweils eine Lauffläche auf und/oder erstrecken sich bevorzugt im Wesentlichen parallel zur Hubrichtung. Das Verbindungselement und das Kontaktelement sind bevorzugt einstückig miteinander ausgeführt, wobei "einstückig" hierbei insbesondere bedeutet, dass das Verbindungselement nur unter Funktionsverlust der Verbindung der beiden Bereiche der Führungseinheit von dem Kontaktelement getrennt werden kann. Durch das Verbindungselement bzw. eine Interaktion der beiden Koppelelemente mit zwei Bereichen der Führungseinheit kann eine Verdrehung des Hubelements relativ zu der Führungseinheit sicher und konstruktiv einfach reduziert und/oder verhindert werden, was sich unmittelbar auf ein gutes Sägeergebnis auswirkt.

Vorteilhafterweise ist die erste Lagereinheit als eine Gleitlagereinheit ausgebildet. Hierbei soll unter einer "Gleitlagereinheit" insbesondere eine Einheit verstanden werden, bei der Interaktionspartner direkt und/oder nur durch eine Schmiermittelschicht getrennt aneinander vorbei bewegbar sind und/oder deren relative Bewegung zueinander auf einer Gleitreibung beruht. Die Gleitlagereinheit wird bevorzugt von der Lauffläche/den Laufflächen der Führungseinheit und der Lauffläche/den Laufflächen der Lagereinheit bzw. der Kontaktelemente gebildet. Die erste Lagereinheit ist bevorzugt an einem oberen Ende des Hubelements, das von einer Werkzeugaufnahme wegweist, angeordnet. Durch die Ausführung der Lagereinheit als Gleitlagereinheit kann die Lagereinheit konstruktiv einfach gestaltet werden und sie kann kostengünstig sowie Bauraum und Bauteil sparend realisiert werden.

Ferner ist es vorteilhaft, wenn die Führungsvorrichtung eine weitere Lagereinheit aufweist, die als eine Gleitlagereinheit ausgebildet ist. Diese Gleitlagereinheit ist insbesondere als Linearlager ausgebildet und weist bevorzugt eine Sinterbuchse auf. Alternativ und/oder zusätzlich wäre eine Ausgestaltung als Schub- und/oder Drehschubgelenk denkbar. Grundsätzlich wäre jedoch jede andere, dem Fachmann als zweckdienlich erscheinende Ausgestaltung der Gleitlagereinheit, insbesondere beruhend auf einem selbstschmierenden Prinzip, denkbar. Mittels der weiteren Lagereinheit bzw. Gleitlagereinheit kann das Hubelement vorteilhaft gelagert und gleichzeitig linear geführt werden.

Des Weiteren kann es vorteilhaft sein, wenn die weitere Lagereinheit ortsfest an der Führungseinheit angeordnet ist. In diesem Zusammenhang definiert der Begriff "ortsfest", dass die weitere Lagereinheit relativ zu der Führungseinheit unbeweglich bzw. an dieser fixiert ist. Alternativ und/oder zusätzlich bedeutet "ortsfest" hier, dass die weitere Lagereinheit bei einer Bewegung, wie einer Pendelbewegung der Führungseinheit, mit dieser, insbesondere um die Pendelachse, bewegt wird. Durch die Realisierung der festen Anordnung der weiteren Lagereinheit kann eine Lageranordnung mit der ersten Lagereinheit und der weiteren Lagereinheit konstruktiv einfach und Bauraum sparend ausgeführt werden.

In einer weiteren Ausgestaltung der Erfindung wird vorgeschlagen, dass die erste Lagereinheit ein Aufnahmeelement für das Hubelement aufweist. In diesem Zusammenhang soll unter einem "Aufnahmeelement" insbesondere ein Element und/oder eine Ausgestaltung verstanden werden, das bzw. die in direktem Kontakt zu dem Hubelement steht. Alternativ und/oder zusätzlich soll darunter verstanden werden, dass das Element bzw. die Ausgestaltung in seiner bzw. ihrer Kontur an eine Außenkontur des Hubelements angepasst ist, so dass das Element bzw. die Ausgestaltung an zumindest 10 % einer Außenkontur und/oder eines Umfangs des Hubelements angeordnet bzw. angepasst ist. Das Aufnahmeelement ist beispielsweise als U-förmige und/oder als napfförmige Einbuchtung und/oder als Ausnehmung mit einem das Hubelement umgreifenden Profil ausgestaltet. Grundsätzlich wäre jedoch jede andere, dem Fachmann als sinnvoll erscheinende Formgebung denkbar. Das Aufnahmeelement und das Hubelement sind bevorzugt stoffschlüssig, formschlüssig und/oder kraftschlüssig miteinander verbunden. Hierbei kommt jede, dem Fachmann als gebräuchlich erscheinende Art der Herstellung eines Stoff-, Form- und/oder Kraftschlusses, wie etwa Kleben, Sintern, Schweißen, Schrauben, Nieten etc., in Betracht. Durch den Stoff-, Form- und/oder Kraftschluss sind das Hubelement und die erste Lagereinheit konstruktiv einfach, zuverlässig und Bauteil sparend zusammen in Hubrichtung bewegbar angeordnet.

Ferner wird vorgeschlagen, dass die erste Lagereinheit ein Koppelelement aufweist, das dazu vorgesehen ist, mit einem Motorabtrieb der Handwerkzeugmaschine gekoppelt zu werden. Hierbei soll unter einem "Koppelelement" insbesondere ein Element verstanden werden, das die erste Lagereinheit und einen Motorabtrieb, wie beispielsweise eine Ankerwelle, mit einem nachgeschalteten Getriebe bzw. Pendelgetriebe wirkungsmäßig verbindet. Ferner soll unter "vorgesehen" speziell ausgestattet und/oder ausgelegt verstanden werden. Durch das Koppelelement kann ein Antrieb eines Motors konstruktiv einfach und sicher auf das mit der ersten Lagereinheit verbundene Hubelement übertragen werden.

Eine konstruktiv einfache und Bauteil sparende Befestigung der Führungsvorrichtung und damit des Hubelements kann vorteilhaft erreicht werden, wenn die Führungsvorrichtung ein Lagermittel aufweist, das dazu vorgesehen ist, die Führungseinheit an einem Gehäuse der Handwerkzeugmaschine zu lagern. Hierbei soll unter einem "Lagermittel" ein Mittel verstanden werden, das dazu vorgesehen ist, Lagerkräfte der Führungseinheit aufzunehmen und/oder an das Gehäuse der Handwerkzeugmaschine weiterzuleiten. Zudem soll unter dem "Gehäuse" insbesondere ein Außengehäuse der Handwerkzeugmaschine verstanden werden. Generell wäre jedoch auch eine Befestigung an einem anderen in der Handwerkzeugmaschine angeordneten Gehäuse, wie etwa einem Getriebe- und/oder Motorgehäuse, möglich.

Zudem wird vorgeschlagen, dass die Pendelachse relativ zu einem Gehäuse der Handwerkzeugmaschine ortsfest angeordnet ist. In diesem Zusammenhang soll unter "ortsfest" insbesondere verstanden werden, dass die Pendelachse relativ zu dem Gehäuse fixiert bzw. unbeweglich und insbesondere axial unbeweglich und/oder undrehbar ist. Durch die ortsfeste Anordnung kann eine bei herkömmlichen Handwerkzeugmaschinen gebräuchliche Pendelbewegung ohne konstruktive Umgestaltung beibehalten werden, wodurch vorteilhaft ein bewährtes Funktionsprinzip Verwendung findet.

Eine bevorzugte Weiterbildung besteht darin, dass das Hubelement als Hohlkörper ausgebildet ist. In diesem Zusammenhang soll unter einem "Hohlkörper" insbesondere ein Körper verstanden werden, der eine Mantelfläche aufweist, die einen Hohlraum umgibt bzw. einschließt. Hierbei kann eine Außenkontur des Hohlkörpers bzw. des Hubelements jede erdenkliche Form, wie beispielsweise vieleckig, quadratisch, oval oder rund, aufweisen. Durch die erfindungsgemäße Ausgestaltung können ein geringes Hubgewicht und somit eine geringe Ausgleichsmasse bereitgestellt werden, was sich unmittelbar vorteilhaft auf ein geringes Gesamtgewicht des Hubelements auswirkt. Ferner kann so konstruktiv einfach ein Kosten sparendes und leichtes Hubelement bereitgestellt werden.

Eine weitere Ausgestaltung der Erfindung sieht eine Handwerkzeugmaschine, insbesondere eine Stichsäge, mit zumindest einer Führungsvorrichtung vor. Generell wäre jedoch ein Einsatz der Führungsvorrichtung in jeder anderen, dem Fachmann als denkbar erscheinenden Handwerkzeugmaschine, insbesondere mit einem Pendelantrieb eines Hubelements, denkbar.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Führungsvorrichtung,
- Fig. 2: die Führungsvorrichtung der Figur 1 in einer Seitenansicht,
- Fig. 3: eine Gleiteinheit der Führungsvorrichtung der Figur 2 in einer Detaildarstellung,
- Fig. 4: die Führungsvorrichtung der Figur 1 bei einer Montage der Gleiteinheit der Figur 3,
- Fig. 5: ein Teil einer ersten Lagereinheit schematisch als Schnitt entlang der Linie V-V der Figur 4,
- Fig. 6: eine alternative Führungsvorrichtung von vorne,
- Fig. 7: eine Gleiteinheit der Führungsvorrichtung der Figur 6 in einer Detaildarstellung,
- Fig. 8: ein Aufnahmebauteil der Gleiteinheit der Figur 7,
- Fig. 9: ein Teil einer ersten Lagereinheit schematisch als Schnitt entlang der Linie IX-IX der Figur 6,
- Fig. 10 a-e: verschiedene Anordnungsmöglichkeiten eines Führungselements der Führungsvorrichtung der Figur 6 und der Gleiteinheit der Figur 7 relativ zueinander,
- Fig. 11: eine weitere alternative Führungsvorrichtung von vorne,
- Fig. 12: die Führungsvorrichtung der Figur 11 vor einer Montage,
- Fig. 13: eine Gleiteinheit der Führungsvorrichtung der Figur 11 bei einer Montage eines Hubelements,
- Fig. 14: ein Verbindungselement der Gleiteinheit der Figur 13 und
- Fig. 15: ein Teil einer ersten Lagereinheit schematisch als Schnitt entlang der Linie XV-XV der Figur 11.

### Beschreibung der Ausführungsbeispiele

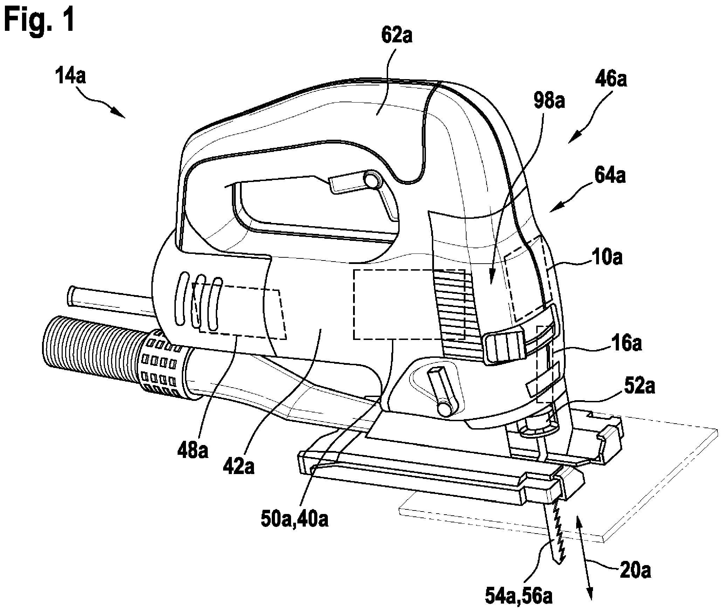

Figur 1 zeigt eine Handwerkzeugmaschine 14a, in der Form einer Stichsäge 46a, mit einem Hubelement 18a, wie einer Hubstange, das in einem Arbeitsbetrieb der Stichsäge 46a in einer fortlaufenden Auf- und Abwärtsbewegung in eine Bewegungsrichtung bzw. Hubrichtung 20a angetrieben wird. Der Antrieb erfolgt durch ein von einem Antriebsmotor 48a angetriebenes Getriebe 50a, wobei beide hier nicht im Detail dargestellt sind und in einem Gehäuse 42a der Handwerkzeugmaschine 14a angeordnet sind. Das Hubelement 18a weist eine Werkzeugaufnahme 52a auf, die ein Einsatzwerkzeug 54a in der Form eines Stichsägeblatts 56a trägt.

Die Handwerkzeugmaschine 14a weist ferner eine Führungsvorrichtung 10a in der Form einer Hubelementführungsvorrichtung 12a auf, mit einer Führungseinheit 16a zu einer Führung des Hubelements 18a in Hubrichtung 20a.

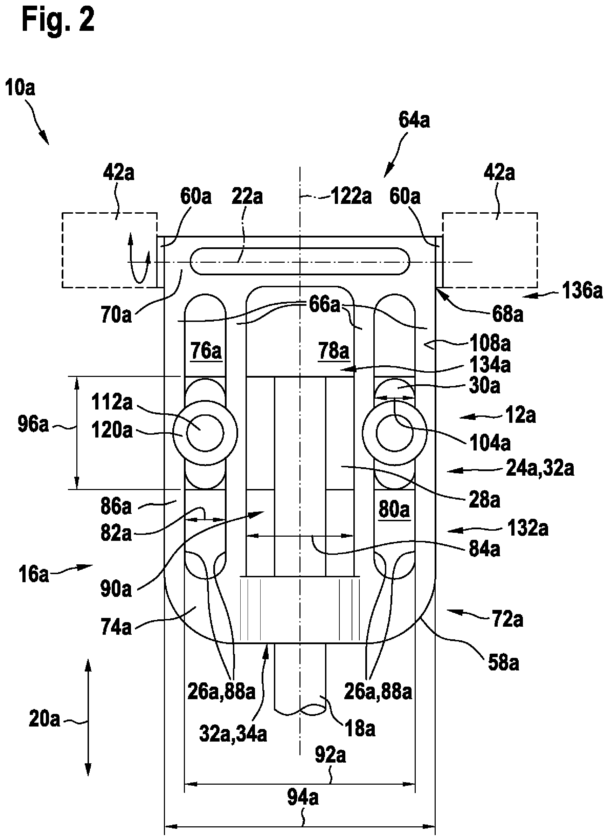

Wie in der Figur 2 dargestellt, ist die Führungseinheit 16a um eine relativ zu dem Gehäuse 42a der Handwerkzeugmaschine 14a ortsfest angeordnete Pendelachse 22a schwenkbar an dem Gehäuse 42a gelagert und somit als ein Pendelelement 58a ausgebildet. Zu dieser Lagerung weist die Führungseinheit 16a bzw. das Pendelelement 58a zwei Lagermittel 60a auf, die bei einem in die Stichsäge 46a eingebauten Zustand der Führungsvorrichtung 10a an einer zu einem Handgriff 62a der Handwerkzeugmaschine 14a weisenden Seite 64a der Führungseinheit 16a angeordnet sind. Die Lagermittel 60a sind als Ausnehmungen ausgebildet, die von einem hier nicht näher gezeigten Achsbolzen durchgriffen sind, der im hier schematisch angedeuteten Gehäuse 42a gelagert ist.

Das Pendelelement 58a weist eine rechteckige Grundform und vier sich parallel zur Hubrichtung 20a erstreckende Stege 66a auf. Die Stege 66a sind jeweils an einem Ende 68a, das bei dem in die Stichsäge 46a eingebauten Zustand der Führungsvorrichtung 10a an der Pendelachse 22a angeordnet ist, über einen Verbindungssteg 70a, der senkrecht zur Hubrichtung 20a verläuft, verbunden. Den Enden 68a gegenüberliegende Enden 72a der Stege 66a sind über einen weiteren Verbindungssteg 74a verbunden. Die Verbindungsstege 70a, 74a und die beiden äußeren Stege 66a bilden somit die rechteckiger Grundform. Die Stege 66a sind senkrecht zur Hubrichtung 20a durch sich in Hubrichtung 20a erstreckende Öffnungen 76a, 78a, 80a beabstandet, wobei die beiden äußeren Öffnungen 76a, 80a eine gleiche Breite 82a aufweisen. Die mittlere Öffnung 78a hingegen weist eine Breite 84a auf, die ca. um das Dreifache größer ist als die Breite der Öffnungen 76a, 80a. Generell wäre hier jedoch jedes, dem Fachmann als zweckdienlich erscheinende Breitenverhältnis denkbar.

Die Führungseinheit 16a weist zudem vier Führungselemente 86a auf, die von den Stegen 66a gebildet sind. Die Führungsfunktion der Führungselemente 86a wird von Begrenzungen 88a der äußeren Öffnungen 76a, 80a übernommen, die sich in paralleler Richtung zu der Hubrichtung 20a erstrecken. Das Hubelement 18a ist mittels einer ersten Lagereinheit 24a entlang der Führungseinheit 16a geführt. Zu dieser Führung weist die Führungseinheit 16a vier Laufflächen 26a bzw. weist jedes Führungselement 86a eine Lauffläche 26a auf, über die die Führungseinheit 16a in direktem Kontakt mit der ersten Lagereinheit 24a steht. Ferner ist die erste Lagereinheit 24a während einer Bewegung in Hubrichtung 20a direkt auf den Laufflächen 26a gleitend bewegbar. Die Laufflächen 26a erstrecken sich jeweils entlang den Begrenzungen 88a der äußeren Öffnungen 76a, 80a. Jeweils zwei Laufflächen 26a sind an zwei Begrenzungen 88a der Öffnungen 76a, 80a angeordnet, die sich gegenüberliegen.

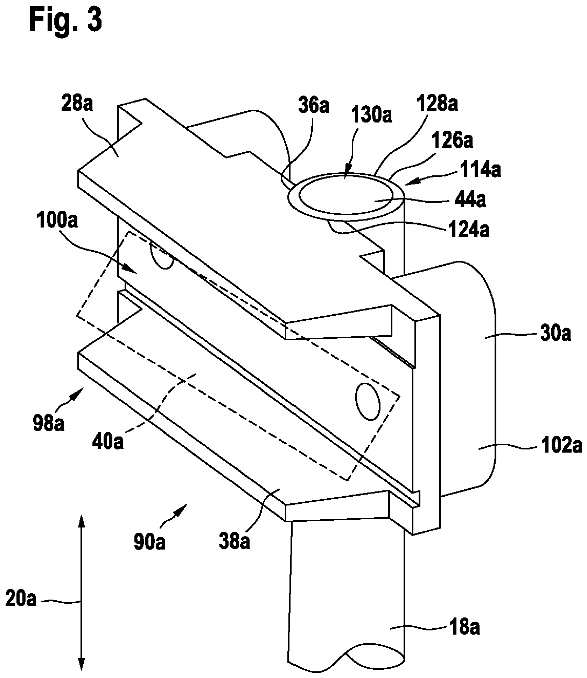

Zu dieser Führung weist die erste Lagereinheit 24a eine Gleiteinheit 90a auf, die mit einem senkrecht zur Hubrichtung 20a ausgerichteten Verbindungselement 28a ausgestattet ist. Die Gleiteinheit 90a trägt zwei mit der Führungseinheit 16a bzw. mit den Laufflächen 26a korrespondierende Kontaktelemente 30a. Das Verbindungselement 28a dient zu einer Überbrückung eines Abstands 92a von äußeren Rändern der Öffnungen 76a, 80a zueinander und erstreckt sich somit über eine gesamte Breite 94a der Führungseinheit 16a, wobei sich die Breite 94a senkrecht zur Hubrichtung 20a erstreckt. Eine Länge 96a des Verbindungselements 28a in Hubrichtung 20a ist vom Fachmann so gewählt, dass eine gute Befestigung des Hubelements 18a und eine erforderliche Stabilität der Gleiteinheit 90a gewährleistet werden. Ferner ist die Gleiteinheit 90a bzw. das Verbindungselement 28a bei dem in die Stichsäge 46a eingebauten Zustand der Führungsvorrichtung 10a auf einer Seite 98a der Führungseinheit 16a angeordnet, die zu einem Motorabtrieb 40a weist (Figur 3). Demnach weist die erste Lagereinheit 24a bzw. das Verbindungselement 28a ein Koppelelement 38a auf, das in der Form einer sich senkrecht zu der Hubrichtung 20a erstreckenden Rinne 100a ausgebildet ist. Das Koppelelement 38a ist in einem Sägebetrieb mit dem Motorabtrieb 40a gekoppelt. Der Motorabtrieb 40a umfasst das Getriebe 50a, in der Form eines Pendelgetriebes, und eine Ankerwelle des Antriebsmotors 48a der Handwerkzeugmaschine 14a.

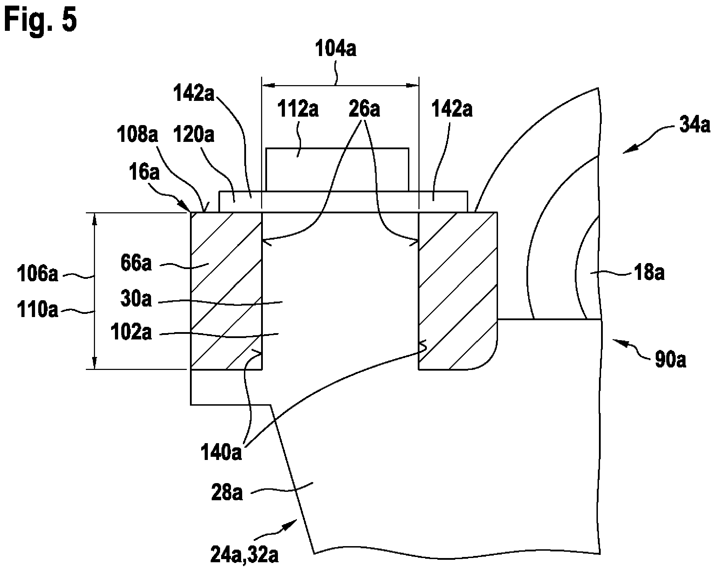

Die Kontaktelemente 30a sind, wie dies in Figur 3 zu sehen ist, als Kontaktstege 102a ausgebildet, die sich in Hubrichtung 20a erstrecken und eine senkrecht zur Hubrichtung 20a ausgerichtete Breite 104a aufweisen. Diese Breite 104a ist an die Breite 82a der äußeren Öffnungen 76a, 80a angepasst, so dass die Kontaktelemente 30a bzw. die Kontaktstege 102a in die Öffnungen 76a, 80a eingreifen können. Ferner weisen die Kontaktstege 102a eine Erstreckung 106a senkrecht zu einer Haupterstreckungsebene 108a der Führungsvorrichtung 10a auf, die einer Tiefe 110a der Stege 66a entspricht, wobei die Tiefe 110a senkrecht zu der Haupterstreckungsebene 108a ausgerichtet ist. Durch diese Anordnung schließen die Kontaktstege 102a und die Stege 66a bündig ab (Figur 5).

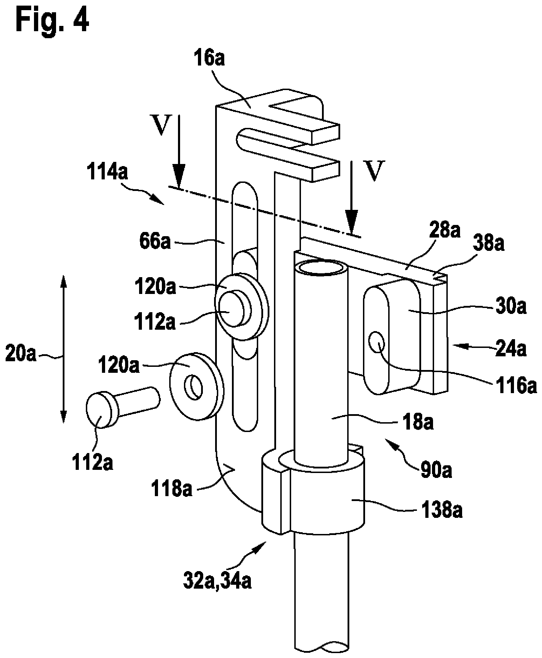

Durch diesen bündigen Abschluss kann, wie dies in Figur 4 zu sehen ist, eine Befestigung der ersten Lagereinheit 24a bzw. der Gleiteinheit 90a an der Führungseinheit 16a einfach durch eine formschlüssige Verbindung erfolgen. Hierbei wird je ein Bolzen 112a von einer Seite 114a, die von dem Koppelelement 38a wegweist, in eine Ausnehmung 116a des Kontaktelements 30a eingeführt. Alternativ zu einem Bolzen könnte auch eine Schraube eingeführt werden. Zwischen einem Bolzenkopf des Bolzens 112a und einer von dem Verbindungselement 28a wegweisenden Oberfläche 118a der Stege 66a der Führungseinheit 16a ist eine Unterlegscheibe 120a angeordnet, die zu einer Vermeidung von Materialabtrag an einer zu der Oberfläche 118a weisenden Auflageseite abgerundet ausgestaltet ist. Die Gleiteinheit 90a ist so an der Führungseinheit 16a axial verschieblich gehalten. Hier wäre jedoch auch jede andere, dem Fachmann als sinnvoll erscheinende Befestigung denkbar.

Ferner weist die erste Lagereinheit 24a bzw. das Verbindungselement 28a an der Seite 114a, die von dem Koppelelement 38a wegweist, und auf einer Höhe einer Längsachse 122a des Pendelelements 58a ein sich in Hubrichtung 20a erstreckendes Aufnahmeelement 36a für das Hubelement 18a auf. Das Aufnahmeelement 36a ist als U-förmige Einbuchtung 124a ausgebildet und ist dadurch an einen Teil eines Außenumfangs 126a des Hubelements 18a angepasst. Das Aufnahmeelement 36a und das Hubelement 18a sind mittels eines Schweißens und somit stoffschlüssig miteinander verbunden, wodurch das Verbindungselement 28a und das Hubelement 18a als Gleiteinheit 90a zusammen beweglich angeordnet sind.

Das Hubelement 18a ist als ein Hohlkörper 44a bzw. als ein Zylindermantel 128a, der einen Hohlraum 130a umschließt, ausgebildet und verläuft in einem montierten Zustand entlang der Öffnung 78a. Ferner ist das Hubelement 18a über eine Lageranordnung 132a in Hubrichtung 20a beweglich gelagert. Die Lageranordnung 132a weist die erste Lagereinheit 24a, die als eine Gleitlagereinheit 32a ausgebildet ist, und eine weitere Lagereinheit 34a, die ebenso als eine Gleitlagereinheit 32a ausgebildet ist, auf. Die erste Lagereinheit 24a ist an einer der Werkzeugaufnahme 52a gegenüberliegenden Seite 134a des Hubelements 18a bzw. an einer zu der Pendelachse 22a weisenden Seite 136a der Führungseinheit 16a angeordnet. Die weitere Lagereinheit 34a ist ortsfest an der Führungseinheit 16a angeordnet, und zwar in dem weiteren Verbindungssteg 74a. Die weitere Lagereinheit 34a ist als eine Sinterbuchse 138a ausgeführt, wodurch die Gleiteinheit 90a bzw. das Hubelement 18a und das Verbindungselement 28a mit dem Kontaktelement 30a linear geführt sind.

In der Figur 5 ist ein Teil der ersten Lagereinheit 24a bzw. der Gleitlagereinheit 32a schematisch als Schnitt entlang der Linie V-V der Figur 4 abgebildet. Das dargestellte Kontaktelement 30a des Verbindungselements 28a weist zwei Laufflächen 140a auf, die zu den Laufflächen 26a der Führungseinheit 16a bzw. der Führungselemente 86a korrespondieren. Die Gleitlagereinheit 32a der ersten Lagereinheit 24a wird von den Laufflächen 26a der Führungseinheit 16a und den Laufflächen 140a der ersten Lagereinheit 24a bzw. der Kontaktelemente 30a gebildet. Ferner ist ein Überstand 142a der Unterlegscheibe 120a, der sich über die Breite 104a der Kontaktelemente 30a erstreckt, ersichtlich, was die Gleiteinheit 90a zusätzlich zu einer Wirkung der Laufflächen 26a, 140a vor einem Verdrehen schützt.

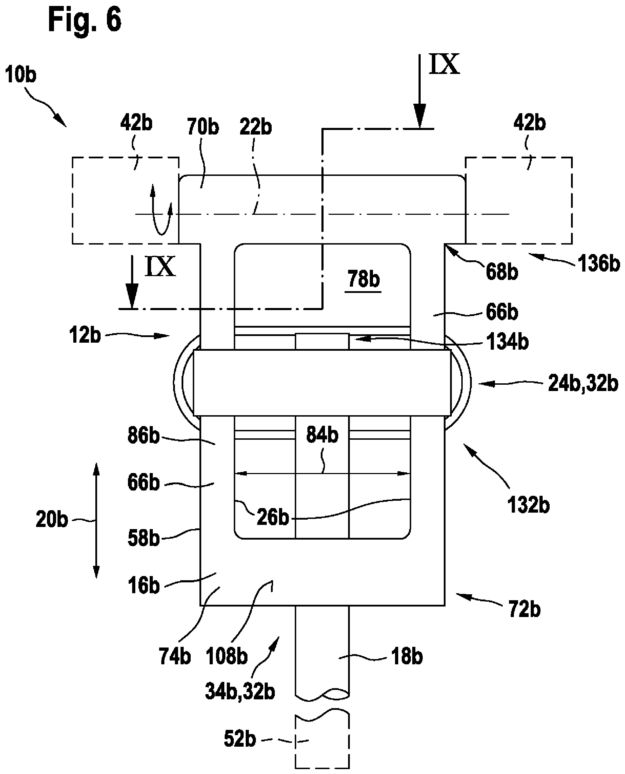

In den Figuren 6 bis 15 sind alternative Ausführungsbeispiele der Führungsvorrichtung 10a dargestellt. Im Wesentlichen sind gleich bleibende Bauteile, Merkmale und Funktionen grundsätzlich mit den gleichen Bezugszeichen beziffert. Zur Unterscheidung der Ausführungsbeispiele sind jedoch den Bezugszeichen der Ausführungsbeispiele die Buchstaben a bis c hinzugefügt. Die nachfolgende Beschreibung beschränkt sich im Wesentlichen auf die Unterschiede zu dem Ausführungsbeispiel in den Figuren 1 bis 5, wobei bezüglich gleich bleibender Bauteile, Merkmale und Funktionen auf die Beschreibung des Ausführungsbeispiels in den Figuren 1 bis 5 verwiesen werden kann.

Die Figur 6 zeigt eine alternative Führungsvorrichtung 10b bzw. eine Hubelementführungsvorrichtung 12b für eine Handwerkzeugmaschine, in der Form einer Stichsäge, wie sie in der Figur 1 dargestellt ist. Die Führungsvorrichtung 10b weist eine Führungseinheit 16b zu einer Führung eines Hubelements 18b, das als ein Hohlkörper 44b ausgebildet ist, in eine Hubrichtung 20b auf. Ferner ist die Führungseinheit 16b um eine Pendelachse 22b, die relativ zu einem Gehäuse 42b der Handwerkzeugmaschine ortsfest angeordnet ist, schwenkbar gelagert und bildet somit ein Pendelelement 58b.

Das Pendelelement 58b hat eine rechteckige Grundform und weist zwei Stege 66b auf, die sich parallel zur Hubrichtung 20b erstrecken. Die Stege 66b sind an einem Ende 68b, das bei dem in die Stichsäge eingebauten Zustand der Führungsvorrichtung 10b an der Pendelachse 22b angeordnet ist, über einen Verbindungssteg 70b verbunden, der senkrecht zur Hubrichtung 20b verläuft. Die den Enden 68b gegenüberliegenden Enden 72b der Stege 66b sind über einen weiteren Verbindungssteg 74b verbunden. Ferner sind die Stege 66b senkrecht zur Hubrichtung 20b durch eine Öffnung 78b, die sich in Hubrichtung 20b erstreckt, beabstandet. Die Stege 66b der Führungseinheit 16b bilden Führungselemente 86b, die jeweils eine Lauffläche 26b aufweisen, wobei die Laufflächen 26b zueinander weisend angeordnet sind. Mittels der Laufflächen 26b ist die erste Lagereinheit 24b während einer Bewegung in Hubrichtung 20b direkt gleitend auf der Führungseinheit 16b bewegbar.

Die Führungsvorrichtung 10b weist eine Lageranordnung 132b zu einer in Hubrichtung 20b beweglichen Lagerung des Hubelements 18b mit einer ersten Lagereinheit 24b und einer weiteren Lagereinheit 34b auf. Beide Lagereinheiten 24b, 34b sind jeweils als eine Gleitlagereinheit 32b ausgebildet. Zudem ist die weitere Lagereinheit 34b in der Form einer Sinterbuchse (nicht im Detail gezeigt) ausgeführt und ortsfest an der Führungseinheit 16b bzw. in dem weiteren Verbindungssteg 74b angeordnet.

Die erste Lagereinheit 24b ist an einer Seite 134b des Hubelements 18b angeordnet, die einer Werkzeugaufnahme 52b gegenüberliegt, bzw. an einer Seite 136b der Führungseinheit 16b, die zu der Pendelachse 22b weist. Das Hubelement 18b ist mittels der ersten Lagereinheit 24b entlang der Führungseinheit 16b geführt.

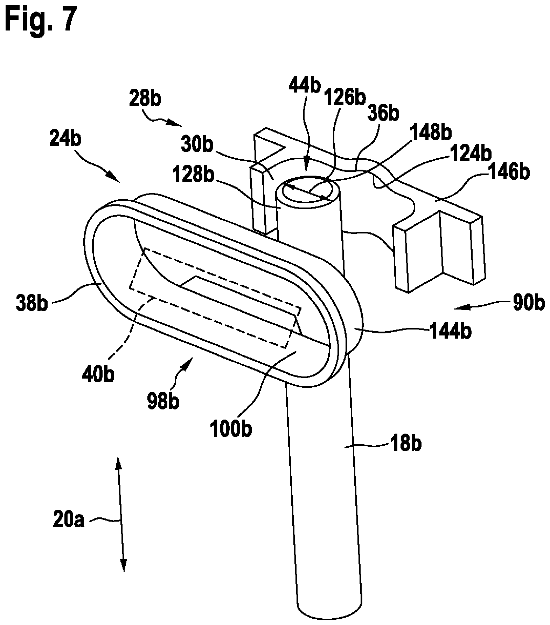

Hierzu weist die erste Lagereinheit 24b, wie in Figur 7 abgebildet, eine Gleiteinheit 90b mit einem senkrecht zur Hubrichtung 20b ausgerichteten Verbindungselement 28b und dem Hubelement 18b auf, wodurch das Verbindungselement 28b und das Hubelement 18b im montierten Zustand und während einer Hubbewegung zusammen beweglich angeordnet sind. Das Verbindungselement 28b ist zweiteilig ausgebildet und weist ein Gleitstück 144b und ein Aufnahmebauteil 146b für das Hubelement 18b auf. An das Gleitstück 144b - und damit an die erste Lagereinheit 24b - ist ein Koppelelement 38b, in der Form einer sich senkrecht zu der Hubrichtung 20a erstreckenden Rinne 100b, angeformt. Das Koppelelement 38b ist in einem Sägebetrieb mit einem Motorabtrieb 40b der Handwerkzeugmaschine gekoppelt. Das Aufnahmebauteil 146b weist ein Aufnahmeelement 36b, das als eine napfförmige Einbuchtung 124b ausgebildet ist, für das Hubelement 18b auf und ist dadurch an einen Teil eines Außenumfangs 126b des Hubelements 18b angepasst. Das Aufnahmeelement 36b und das Hubelement 18b sind mittels eines Schweißens und somit stoffschlüssig miteinander verbunden. Andere, dem Fachmann als sinnvoll erscheinende Verbindungen, wie geschraubt, sind möglich. Zudem sind an das Aufnahmebauteil 146b des Verbindungselements 28b zwei mit der Führungseinheit 16b korrespondierende Kontaktelemente 30b, in der Form von sich in Hubrichtung 20b erstreckenden Kontaktstegen 102b, angeformt.

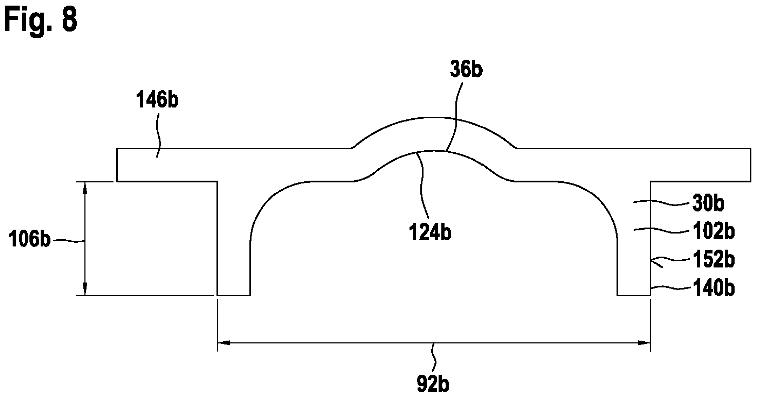

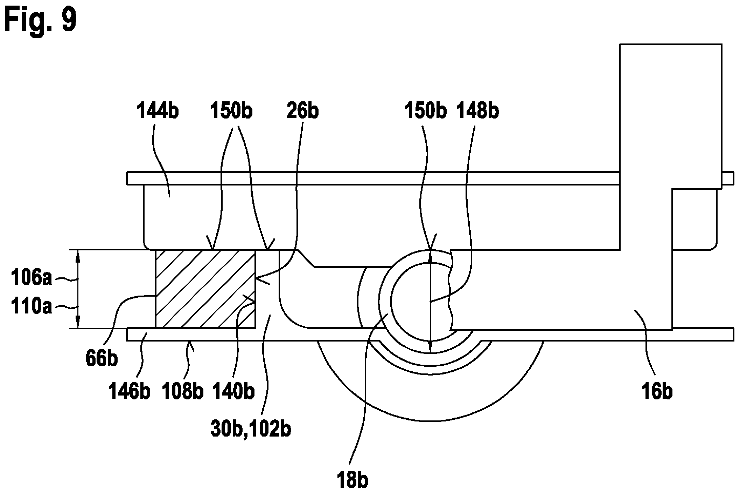

Wie in den Figuren 8 und 9 gezeigt ist, weisen die Kontaktstege 102b eine Erstreckung 106b auf, die senkrecht zu einer Haupterstreckungsebene 108b der Führungsvorrichtung 10b ausgerichtet ist und die einer Tiefe 110b der Stege 66b senkrecht zu der Haupterstreckungsebene 108b entspricht. Ferner entspricht die Erstreckung 106b in etwa einem Außendurchmesser 148b des Hubelements 18b, so dass die Kontaktstege 102a und die Stege 66b bündig abschließen. Durch den bündigen Abschluss kann das Gleitstück 144b, das an einer Seite 98b der Führungseinheit 16b angeordnet ist, die zu dem Motorabtrieb 40b weist, parallel zur Haupterstreckungsebene 108b plan an Oberflächen 150b der Stege 66b, der Kontaktstege 102b und des Hubelements 18b anliegen, die zum Gleitstück 144b weisen. So kann das Gleitstück 144b einfach mit dem Hubelement 18b verbunden werden (siehe Figur 9). Hierbei ist jede, dem Fachmann als sinnvoll erscheinende Befestigungsart denkbar.

Hierbei sind die Kontaktstege 102b senkrecht zur Hubrichtung 20b im eingebauten Zustand so weit voneinander beabstandet, dass ein Abstand 92b der Außenflächen 152b der Kontaktstege 102b, die von dem Hubelement 18b wegweisen, auf eine Breite 84b der Öffnung 78b, die sich senkrecht zur Hubrichtung 20b erstreckt, angepasst ist. Dadurch können die Kontaktelemente 30b bzw. die Kontaktstege 102b in die Öffnung 78b eingreifen. Ferner liegen dadurch Laufflächen 140b der Kontaktstege 102b, die an den Außenflächen 152b der Kontaktstege 102b ausgebildet sind und zu den Laufflächen 26b der Führungseinheit 16b korrespondieren, direkt an den Laufflächen 26a der Führungselemente 86b an (Figur 9). Die Gleitlagereinheit 32b der ersten Lagereinheit 24b wird von den Laufflächen 26b der Führungseinheit 16b und den Laufflächen 140b der ersten Lagereinheit 24b bzw. der Kontaktelemente 30b gebildet, was neben einer guten Führung ein Verdrehen der Gleiteinheit 90b verhindert.

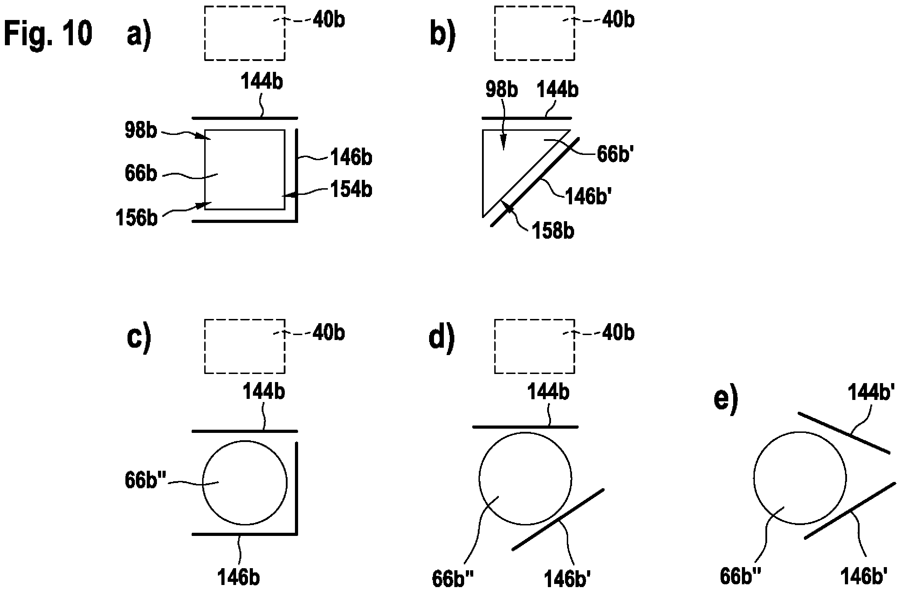

In der Figur 10 sind fünf alternative Anordnungen der Führungseinheit 16b, des Gleitstücks 144b und des Aufnahmebauteils 146b schematisch anhand eines Führungselements 86b bzw. eines Stegs 66b gezeigt. Hierbei stellt Figur 10a die Anordnung gemäß Figur 9 mit einer rechteckigen bzw. quadratischen Ausgestaltung des Stegs 66b dar, wobei das Gleitstück 144b an der Seite 98b des Stegs 66b angeordnet ist, die zum Motorabtrieb 40b weist. Das Aufnahmebauteil 146b ist an zwei Seiten 154b, 156b des Stegs 66b angeordnet, wobei die Seite 154b an die Seite 98b in einer senkrechten Orientierung angrenzt und die Seite 156b der Seite 98b gegenüberliegt und senkrecht zu der Seite 154b ausgerichtet ist.

Figur 10b zeigt einen dreieckig ausgebildeten Steg 66b', wobei das Gleitstück 144b analog zu Figur 10a an der Seite 98b des Stegs 66b' angeordnet ist, die zum Motorabtrieb 40b weist. Ein Aufnahmebauteil 146b' ist an einer Seite 158b des Dreiecks angeordnet, die zu der Seite 98b schräg verläuft.

In Figur 10c ist ein runder Steg 66b" gezeigt, dessen Anordnung eines Gleitstücks 144b und eines Aufnahmebauteils 146b der Anordnung der Figur 10a - also einer rechteckigen Anordnung - entspricht.

Figur 10d zeigt einen runden Steg 66b", wobei ein Gleitstück 144b analog zu Figur 10a angeordnet ist und ein Aufnahmebauteil 146b' analog zu Figur 10b, also schräg zu dem Gleitstück 144b, angeordnet ist.

In Figur 10e ist wiederum ein runder Steg 66b" dargestellt, wobei sowohl ein Gleitstück 144b' wie auch ein Aufnahmebauteil 146b' schräg zueinander angeordnet sind. Eine Ausrichtung relativ zu einem Motorabtrieb wird von dem Fachmann konstruktionsbedingt gewählt werden.

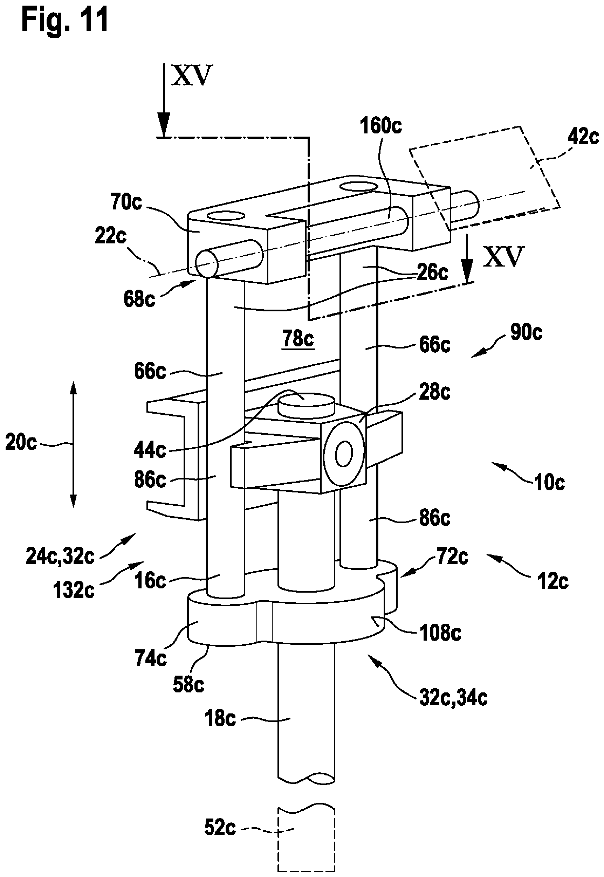

In der Figur 11 ist eine weitere alternative Führungsvorrichtung 10c bzw. eine Hubelementführungsvorrichtung 12c für eine Handwerkzeugmaschine, in der Form einer Stichsäge, wie sie in der Figur 1 gezeigt ist, dargestellt. Die Führungsvorrichtung 10c weist eine Führungseinheit 16c zu einer Führung eines Hubelements 18c in eine Hubrichtung 20c auf. Ferner ist die Führungseinheit 16c um eine Pendelachse 22c, die relativ zu einem Gehäuse 42c der Handwerkzeugmaschine 14c ortsfest über einen Achsbolzen 160c angeordnet ist, schwenkbar gelagert und bildet somit ein Pendelelement 58c.

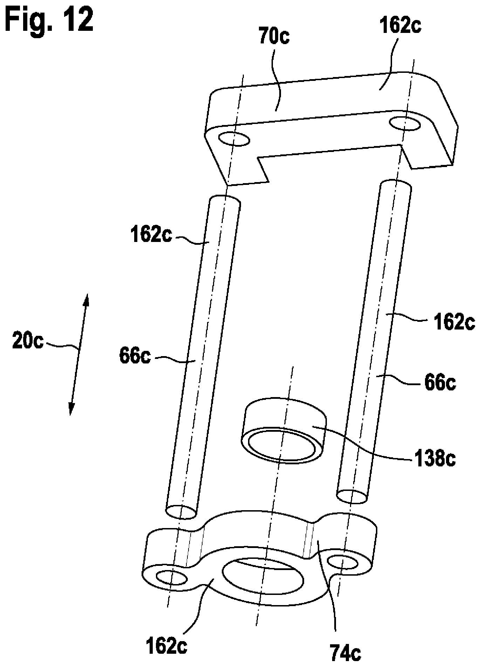

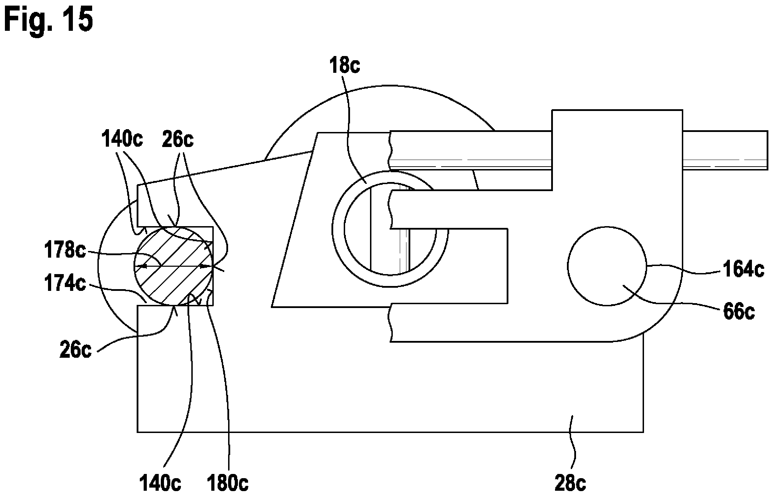

Das Pendelelement 58c hat eine rechteckige Grundform und ist mehrteilig ausgeführt bzw. weist vier Bauteile 162c auf (Figur 12). Zwei Bauteile 162c sind von jeweils einem Steg 66c, in der Form eines Zylinderstifts, gebildet, der sich parallel zur Hubrichtung 20c erstreckt. Diese Stege 66c sind jeweils an einem Ende 68c, das bei dem in die Stichsäge eingebauten Zustand der Führungsvorrichtung 10c an der Pendelachse 22c angeordnet ist, über ein drittes Bauteil 162c, das senkrecht zur Hubrichtung 20c verläuft und in der Form eines Verbindungsstegs 70c ausgeführt ist, verbunden. Die den Enden 68c gegenüberliegenden Enden 72c der Stege 66c sind über das vierte Bauteil 162c bzw. einen weiteren Verbindungssteg 74c verbunden. Die vier Bauteile 162c schließen eine Öffnung 78c ein, die sich in Hubrichtung 20c erstreckt und eine O-Form aufweist. Die Stege 66c der Führungseinheit 16c bilden Führungselemente 86c, die jeweils drei Laufflächen 26c aufweisen, wobei die Laufflächen 26c um ca. 90° über einen Umfang 164c des Zylinderstabs versetzt angeordnet sind (dargestellt in Figur 15). Mittels der Laufflächen 26c ist die erste Lagereinheit 24c während einer Bewegung in Hubrichtung 20c direkt gleitend auf der Führungseinheit 16c bewegbar.

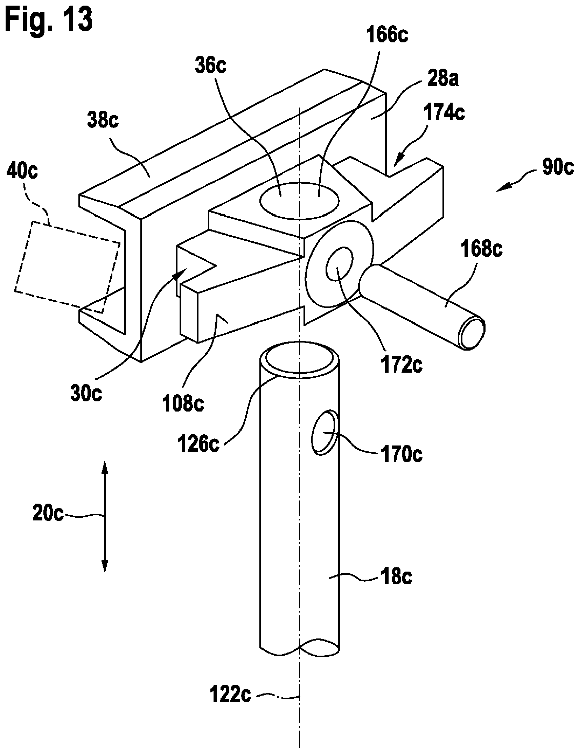

Ferner weist die Führungsvorrichtung 10c eine Lageranordnung 132c mit zwei analog zu den ersten beiden Ausführungsbeispielen ausgebildeten Lagereinheiten 24c, 34c bzw. Gleitlagereinheiten 32c auf. Zu einer Führung des als ein Hohlkörper 44c ausgeführten Hubelements 18c mittels der ersten Lagereinheit 24c entlang der Führungseinheit 16c weist die erste Lagereinheit 24c, wie in Figur 13 gezeigt ist, eine Gleiteinheit 90c mit einem senkrecht zur Hubrichtung 20c ausgerichteten Verbindungselement 28c und dem Hubelement 18c selbst auf.

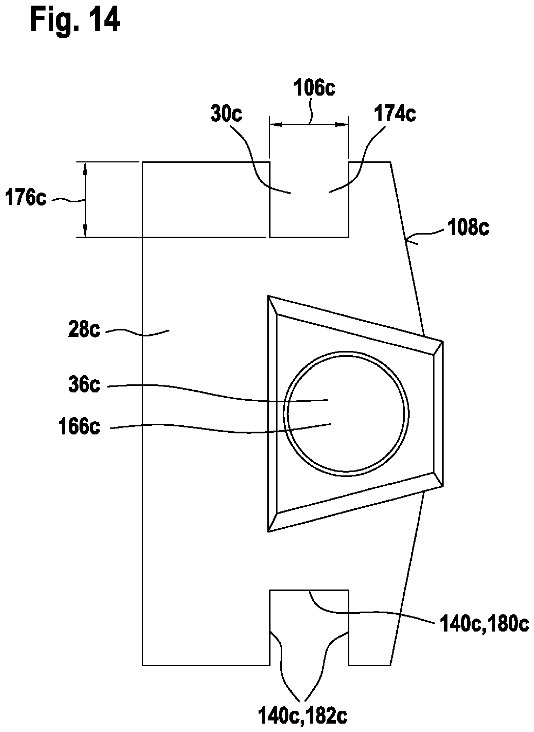

Das Verbindungselement 28c weist analog zu den Ausführungsbeispielen der Figuren 1 bis 10 ein Koppelelement 38c und ein Aufnahmeelement 36c für das Hubelement 18b auf. Das Aufnahmeelement 36c ist als eine kreisförmige Ausnehmung 166c ausgebildet, die an einen Außenumfang 126c des Hubelements 18c angepasst ist und mittig durch eine Längsachse 122c der Führungseinheit 16c in dem Verbindungselement 28c verläuft (Figur 14). Das Verbindungselement 28c und das Hubelement 18c sind im montierten Zustand der Gleiteinheit 90c mittels eines Sicherungsstifts 168c, der sich senkrecht zu einer Haupterstreckungsebene 108c der Führungseinheit 16c erstreckt, formschlüssig verbunden. Dieser Sicherungsstift 168c wird bei einer Montage von einer Seite, die von einem Motorabtrieb 40c wegweist, durch korrespondierende Öffnungen 170c, 172c in dem Verbindungselement 28c und dem Hubelement 18c geschoben (Figur 13).

Ferner sind in dem Verbindungselement 28c zwei mit der Führungseinheit 16c korrespondierende Kontaktelemente 30c in der Form von seitlich angeordneten rechteckigen Ausnehmungen 174c ausgebildet, die in ihren Erstreckungen 106c, 176c senkrecht und parallel zu der Haupterstreckungsebene 108c an einen Außendurchmesser 178c der Stege 66c bzw. der Zylinderstifte angepasst sind (Figur 15). Flächen 180c der Ausnehmungen 174c, die zum Hubelement 18c weisen, sind so weit voneinander beabstandet, dass die Stege 66c der Führungseinheit 16c so in den Kontaktelementen 30c bzw. den Ausnehmungen 174c aufgenommen werden können, dass die Laufflächen 26c der Stege 66c, die zu dem Hubelement 18c weisen, an den zu diesen korrespondierenden Laufflächen 140c, die an den Flächen 180c der Ausnehmungen 174c ausgebildet sind, direkt anliegen. Ferner liegen die beiden weiteren Laufflächen 140c an sich gegenüberliegenden Innenflächen 182c der Ausnehmungen 174c an. Die Gleitlagereinheit 32c der ersten Lagereinheit 24c wird somit von den Laufflächen 26c der Führungseinheit 16c und den Laufflächen 140c der ersten Lagereinheit 24c bzw. der Kontaktelemente 30c gebildet, was ein Verdrehen der Gleiteinheit 90c minimiert.

## Patentansprüche

1. Handwerkzeugmaschine, insbesondere Stichsäge (46a-c), mit zumindest einem Hubelement (18a-c), das in einem Arbeitsbetrieb in einer fortlaufenden Auf- und Abwärtsbewegung in eine Hubrichtung (20a-c) antreibbar ist, und mit zumindest einer Führungsvorrichtung, insbesondere einer Hubelementführungsvorrichtung (12a-c), die zumindest eine Führungseinheit (16a-c) zu einer Führung des Hubelements (18a-c) in Hubrichtung (20a-c) aufweist, wobei die Führungseinheit (16a-c) um eine Pendelachse (22a-c) schwenkbar gelagert ist, und die eine Lageranordnung (132a-c) zu einer in Hubrichtung (20a-c) beweglichen Lagerung des Hubelements (18a-c) umfasst, die eine erste Lagereinheit (24a-c) und eine weitere Lagereinheit (34a-c) aufweist, **dadurch gekennzeichnet, dass** das Hubelement (18a-c) mittels zumindest der ersten Lagereinheit (24a-c) entlang der Führungseinheit (16a-c) geführt ist.

2. Handwerkzeugmaschine nach Anspruch 1, **dadurch gekennzeichnet, dass** die Führungseinheit (16a-c) zumindest eine Lauffläche (26a-c) aufweist.

3. Handwerkzeugmaschine nach Anspruch 1 oder 2, **dadurch gekennzeichnet, dass** die erste Lagereinheit (24a-c) zumindest ein im Wesentlichen senkrecht zur Hubrichtung (20a-c) ausgerichtetes Verbindungselement (28a-c) aufweist, das zumindest zwei mit der Führungseinheit (16a-c) korrespondierende Kontaktelemente (30a-c) aufweist.

4. Handwerkzeugmaschine nach einem der vorhergehenden Ansprüche, **dadurch gekennzeichnet, dass** die erste Lagereinheit (24a-c) als eine Gleitlagereinheit (32a-c) ausgebildet ist.

5. Handwerkzeugmaschine nach einem der vorhergehenden Ansprüche, **dadurch gekennzeichnet, dass** die weitere Lagereinheit (34a-c) als eine Gleitlagereinheit (32a-c) ausgebildet ist.

6. Handwerkzeugmaschine nach Anspruch 5, **dadurch gekennzeichnet, dass** die weitere Lagereinheit (34a-c) ortsfest an der Führungseinheit (16a-c) angeordnet ist.

7. Handwerkzeugmaschine nach einem der vorhergehenden Ansprüche, **dadurch gekennzeichnet, dass** die erste Lagereinheit (24a-c) ein Aufnahmeelement (36a-c) für das Hubelement (18a-c) aufweist.

8. Handwerkzeugmaschine nach einem der vorhergehenden Ansprüche, **dadurch gekennzeichnet, dass** die erste Lagereinheit (24a-c) ein Koppelelement (38a-c) aufweist, das dazu vorgesehen ist, mit einem Motorabtrieb (40a-c) der Handwerkzeugmaschine (14a-c) gekoppelt zu werden.

9. Handwerkzeugmaschine nach einem der vorhergehenden Ansprüche, **dadurch gekennzeichnet, dass** die Pendelachse (22a-c) relativ zu einem Gehäuse (42a-c) der Handwerkzeugmaschine (14a-c) ortsfest angeordnet ist.

10. Handwerkzeugmaschine nach einem der vorhergehenden Ansprüche, **dadurch gekennzeichnet, dass** das Hubelement (18a-c) als ein Hohlkörper (44a-c) ausgebildet ist.

## Claims

1. Portable power tool, in particular jigsaw (46a-c), having at least one reciprocating element (18a-c) which is able to be driven in a continuous up and down movement in a stroke direction (20a-c) in working operation, and having at least one guide device, in particular a reciprocating-element guide device (12a-c), which has at least one guide unit (16a-c) for guiding the reciprocating element (18a-c) in the stroke direction (20a-c), wherein the guide unit (16a-c) is mounted so as to be pivotable about a pendulum axis (22a-c), and which comprises a bearing arrangement (132a-c) for mounting the reciprocating element (18a-c) in a movable manner in the stroke direction (20a-c), said bearing arrangement (132a-c) having a first bearing unit (24a-c) and a further bearing unit (34a-c), **characterized in that** the reciprocating element (18a-c) is guided along the guide unit (16a-c) by means of at least the first bearing unit (24a-c).

2. Portable power tool according to Claim 1, **characterized in that** the guide unit (16a-c) has at least one running surface (26a-c).

3. Portable power tool according to Claim 1 or 2, **characterized in that** the first bearing unit (24a-c) has at least one connecting element (28a-c) oriented substantially perpendicularly to the stroke direction (20a-c), said connecting element (28a-c) having at least two contact elements (30a-c) that correspond to the guide unit (16a-c).

4. Portable power tool according to one of the preceding claims, **characterized in that** the first bearing unit (24a-c) is configured as a plain bearing unit (32a-c).

5. Portable power tool according to one of the preceding claims, **characterized in that** the further bearing unit (34a-c) is configured as a plain bearing unit (32a-c).

6. Portable power tool according to Claim 5, **characterized in that** the further bearing unit (34a-c) is arranged in a fixed position on the guide unit (16a-c).

7. Portable power tool according to one of the preceding claims, **characterized in that** the first bearing unit (24a-c) has a receiving element (36a-c) for the reciprocating element (18a-c).

8. Portable power tool according to one of the preceding claims, **characterized in that** the first bearing unit (24a-c) has a coupling element (38a-c) which is intended to be coupled to a motor output (40a-c) of the portable power tool (14a-c).

9. Portable power tool according to one of the preceding claims, **characterized in that** the pendulum axis (22a-c) is arranged in a fixed position relative to a housing (42a-c) of the portable power tool (14a-c).

10. Portable power tool according to one of the preceding claims, **characterized in that** the reciprocating element (18a-c) is configured as a hollow body (44a-c).

## Revendications

1. Machine-outil à main, en particulier scie sauteuse (46a-c), comprenant au moins un élément à mouvement alternatif (18a-c), qui peut être entraîné dans une direction de course (20a-c) suivant un mouvement continu d'avant en arrière en mode de travail, et comprenant au moins un dispositif de guidage, en particulier un dispositif de guidage de l'élément à mouvement alternatif (12a-c), qui présente au moins une unité de guidage (16a-c) pour un guidage de l'élément à mouvement alternatif (18a-c) dans la direction de course (20a-c), l'unité de guidage (16a-c) étant supportée de manière pivotante autour d'un axe de pendule (22a-c) et comprenant un agencement de palier (132a-c) en vue d'un support sur palier de l'élément à mouvement alternatif (18a-c) déplaçable dans la direction de course (20a-c), qui présente une première unité de palier (24a-c) et une unité de palier supplémentaire (34a-c), **caractérisée en ce que** l'élément à mouvement alternatif (18a-c) est guidé au moyen d'au moins la première unité de palier (24a-c) le long de l'unité de guidage (16a-c).

2. Machine-outil à main selon la revendication 1, **caractérisée en ce que** l'unité de guidage (16a-c) présente au moins une surface de roulement (26a-c).

3. Machine-outil à main selon la revendication 1 ou 2, **caractérisée en ce que** la première unité de palier (24a-c) présente au moins un élément de liaison (28a-c) orienté essentiellement perpendiculairement à la direction de course (20a-c), qui présente au moins deux éléments de contact (30a-c) correspondant à l'unité de guidage (16a-c).

4. Machine-outil à main selon l'une quelconque des revendications précédentes, **caractérisée en ce que** la première unité de palier (24a-c) est réalisée sous forme d'unité de palier lisse (32a-c).

5. Machine-outil à main selon l'une quelconque des revendications précédentes, **caractérisée en ce que** l'unité de palier supplémentaire (34a-c) est réalisée sous forme d'unité de palier lisse (32a-c).

6. Machine-outil à main selon la revendication 5, **caractérisée en ce que** l'unité de palier supplémentaire (34a-c) est disposée fixement sur l'unité de guidage (16a-c).

7. Machine-outil à main selon l'une quelconque des revendications précédentes, **caractérisée en ce que** la première unité de palier (24a-c) présente un élément de réception (36a-c) pour l'élément à mouvement alternatif (18a-c).

8. Machine-outil à main selon l'une quelconque des revendications précédentes, **caractérisée en ce que** la première unité de palier (24a-c) présente un élément d'accouplement (38a-c) qui est prévu pour être accouplé à une prise de force de moteur (40a-c) de la machine-outil à main (14a-c).

9. Machine-outil à main selon l'une quelconque des revendications précédentes, **caractérisée en ce que** l'axe de pendule (22a-c) est disposé fixement par rapport à un boîtier (42a-c) de la machine-outil à main (14a-c).

10. Machine-outil à main selon l'une quelconque des revendications précédentes, **caractérisée en ce que** l'élément à mouvement alternatif (18a-c) est réalisé sous forme de corps creux (44a-c).
